# EUROPEAN PATENT APPLICATION

(11) **EP 4 694 462 A1**
(43) Date of publication of application: **11.02.2026**
(21) Application number: 23929089.3
(22) Date of filing: 24.03.2023
(51) Int. Cl.: H04W 72/0457

(54) **METHOD AND APPARATUS FOR PROCESSING CONSISTENT LISTEN-BEFORE-TALK (LBT) FAILURE**

(71) Applicant: Beijing Xiaomi Mobile Software Co., Ltd., Beijing 100085 (CN)
(72) Inventor: JIANG, Xiaowei, Beijing 100085 (CN)
(74) Representative: Hersina, Günter
(86) International application number: PCT/CN2023/083889
(87) International publication number: WO 2024/197487

(57) **Abstract**

Disclosed in the embodiments of the present disclosure are a method and apparatus for processing a consistent listen-before-talk (LBT) failure, wherein the method can be performed by a terminal device. The method comprises: determining that a sidelink (SL) consistent LBT failure occurs on a physical resource; receiving first information, which is sent by a network-side device, and according to the first information, determining whether the terminal device uses a resource on the physical resource to receive and/or send SL data. By means of the embodiments of the present disclosure, when an SL consistent LBT failure occurs on a physical resource, a terminal device determines, on the basis of determined first information, whether the terminal device itself uses a resource on the physical resource to receive and/or send SL data. Therefore, it is ensured that the terminal device recovers SL communication on the physical resource in a timely manner, so as to improve the communication efficiency of SL communication performed by the terminal device, thereby avoiding a waste of communication resources.

## Description

### TECHNICAL FIELD

The disclosure relates to the field of communication technologies, and in particular to a method and an apparatus for processing consistent listen before talk (LBT) failure.

### BACKGROUND

In related arts, when a terminal autonomously selects communication resources for sidelink (SL) communication in a resource pool configured by a network or pre-configured, if consistent listen before talk (LBT) failure occurs, the terminal cannot report the consistent LBT failure to a network device, and thus cannot determine whether the communication resource on which the consistent LBT failure occurred may resume being used.

### SUMMARY

Embodiments of the disclosure provide a method and an apparatus for processing consistent listen before talk (LBT) failure. The method and the apparatus may be applied to the internet of vehicles, for example, vehicle to everything (V2X) communication, long term evolution-vehicle (LTE-V) communication, vehicle to vehicle (V2V) communication, or used in fields such as intelligent driving and connected vehicles. The terminal may determine, based on the determined information, whether to resume using a physical resource to receive and/or send sidelink (SL) data, in which the consistent LBT failure occurs on the physical resource, thus improving the communication efficiency of the SL communication for the terminal and avoiding waste of communication resources.

In a first aspect, embodiments of the disclosure provide a method for processing consistent LBT failure. The method is performed by a terminal, including: determining that a sidelink (SL) consistent LBT failure occurs on a physical resource; receiving first information sent by a network device; and determining, based on the first information, whether the terminal resumes using resources on the physical resource to receive and/or send SL data.

In the technical solution, when determining that the SL consistent LBT failure occurs on the physical resource, the terminal determines, based on the determined first information, whether to resume using the physical resource to receive and/or send the SL data. Thus, the terminal may timely resume SL communication on the physical resource, improving the communication efficiency of the SL communication for the terminal and avoiding waste of communication resources.

In an implementation, the first information includes a timer configured by the network device; and determining, based on the first information, whether the terminal resumes using the resources on the physical resource to receive and/or send the SL data, includes: determining the timer based on the first information; starting the timer; determining that the terminal resumes using the resources on the physical resource to receive and/or send the SL data when the timer expires; or determining that the terminal does not resume using the resources on the physical resource to receive and/or send the SL data during running of the timer.

In an optional implementation, the physical resource includes at least one of: a bandwidth part (BWP); a resource pool; or a resource block (RB) set.

Optionally, the timer is configured based on a specified granularity; and the specified granularity is at least one of: a BWP granularity; a resource pool granularity; an RB set granularity; or a terminal granularity.

Optionally, the method further includes: determining that the timer expires; and determining that the physical resource cancels an SL consistent LBT failure state.

Optionally, starting the timer includes: determining that the SL consistent LBT failure occurs on the physical resource; and starting the timer associated with the physical resource.

In the technical solution, when determining that the SL consistent LBT failure occurs on the physical resource, the terminal determines, based on the timer configured by the network device, whether to resume using the resources on the physical resource to receive and/or send the SL data. Thus, the terminal may timely resume SL communication on the physical resource, improving the communication efficiency of the SL communication for the terminal.

In an implementation, the first information includes measurement configuration information; and determining, based on the first information, whether the terminal resumes using the resources on the physical resource to receive and/or send the SL data, includes: performing measurement based on the measurement configuration information; and determining a measurement result associated with the physical resource; and determining, based on the measurement result, whether the terminal resumes using the resources on the physical resource to receive and/or send the SL data.

Optionally, determining, based on the measurement result, whether the terminal resumes using the resources on the physical resource to receive and/or send the SL data, includes: determining that the measurement result is less than or equal to a preset threshold, and determining that the terminal resumes using the resources on the physical resource to receive and/or send the SL data; or determining that the measurement result is greater than or equal to a preset threshold, and determining that the terminal does not resume using the resources on the physical resource to receive and/or send the SL data.

Optionally, the measurement includes at least one of: received signal strength indicator (RSSI) measurement; channel occupancy (CO) measurement; or channel busy rate (CBR) measurement.

In an implementation, an allocation mode of SL transmission resources for the terminal is to autonomously select the SL transmission resources; and the terminal is in at least one of the following states: a radio resource control (RRC) connected state; an RRC idle state; an RRC inactive state; or an out-of-coverage state.

In the technical solution, when determining that the SL consistent LBT failure occurs on the physical resource, the terminal determines, based on the measurement configuration information, whether to resume using the resources on the physical resource to receive and/or send the SL data. Thus, the terminal may timely resume SL communication on the physical resource, improving the communication efficiency of the SL communication for the terminal.

In a second aspect, embodiments of the disclosure provide another method for processing consistent LBT failure. The method is performed by a network device, including: sending first information to a terminal, in which the first information is used to indicate the terminal to determine, when determining that a sidelink (SL) consistent LBT failure occurs on a physical resource, whether the terminal resumes using resources on the physical resource to receive and/or send SL data.

In the technical solution, the network device sends first information to the terminal, so that when determining that the SL consistent LBT failure occurs on the physical resource, the terminal determines, based on the first information, whether to resume using the resources on the physical resource to receive and/or send the SL data. Thus, the terminal may timely resume SL communication on the physical resource, improving the communication efficiency of the SL communication for the terminal and avoiding waste of communication resources.

In an implementation, the first information includes a timer; and the timer is used to indicate whether the terminal resumes using the physical resource to receive and/or send the SL data.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

In an implementation, the first information includes measurement configuration information; the measurement configuration information is configured for the terminal to perform measurement, to determine a measurement result associated with the physical resource; and the measurement result is used to indicate whether the terminal resumes using the resources on the physical resource to receive and/or send the SL data.

In an optional implementation, the measurement includes at least one of: RSSI measurement; CO measurement; or CBR measurement.

In a third aspect, embodiments of the disclosure provide a terminal. The terminal includes: a processing module, configured to determine that an SL consistent LBT failure occurs on a physical resource; and a transceiver module, configured to receive first information sent by a network device; wherein the processing module is further configured to determine, based on the first information, whether the terminal resumes using resources on the physical resource to receive and/or send SL data.

In an implementation, the first information includes a timer configured by the network device; and the processing module is specially configured to determine the timer based on the first information; starting the timer; determine that the terminal resumes using the physical resource to receive and/or send the SL data when the timer expires; or determine that the terminal does not resume using resources on the physical resource to receive and/or send the SL data during running of the timer.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

Optionally, the processing module is further configured to determine that the timer expires; and determine that the physical resource cancels an SL consistent LBT failure state.

Optionally, the processing module is specially configured to determine that the SL consistent LBT failure occurs on the physical resource; and start the timer associated with the physical resource.

In an implementation, the first information includes measurement configuration information; and the processing module is specially configured to perform measurement based on the measurement configuration information; and determine a measurement result associated with the physical resource; and determine, based on the measurement result, whether the terminal resumes using the resources on the physical resource to receive and/or send the SL data.

Optionally, the processing module is specially configured to determine that the measurement result is less than or equal to a preset threshold, and determine that the terminal resumes using the resources on the physical resource to receive and/or send the SL data; or determine that the measurement result is greater than or equal to a preset threshold, and determine that the terminal does not resume using the resources on the physical resource to receive and/or send the SL data.

Optionally, the measurement includes at least one of: RSSI measurement; CO measurement; or CBR measurement.

In an implementation, an allocation mode of SL transmission resources for the terminal is to autonomously select the SL transmission resources; and the terminal is in at least one of the following states: an RRC connected state; an RRC idle state; an RRC inactive state; or an out-of-coverage state.

In a fourth aspect, embodiments of the disclosure provide a network device. The network device includes: a transceiver module, configured to send first information to a terminal, in which the first information is used to indicate the terminal to determine, when determining that an SL consistent LBT failure occurs on a physical resource, whether the terminal resumes using resources on the physical resource to receive and/or send SL data.

In an implementation, the first information includes a timer; and the timer is used to indicate whether the terminal resumes using the physical resource to receive and/or send the SL data.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

In an implementation, the first information includes measurement configuration information; the measurement configuration information is configured for the terminal to perform measurement, to determine a measurement result associated with the physical resource; and the measurement result is used to indicate whether the terminal resumes using the resources on the physical resource to receive and/or send the SL data.

In an optional implementation, the measurement includes at least one of: RSSI measurement; CO measurement; or CBR measurement.

In a fifth aspect, embodiments of the disclosure provide a communication device. The communication device includes a processor. When the processor calls a computer program in a memory, the method as described in the first aspect is performed.

In a sixth aspect, embodiments of the disclosure provide a communication device. The communication device includes a processor. When the processor calls a computer program in a memory, the method as described in the second aspect is performed.

In a seventh aspect, embodiments of the disclosure provide a communication device. The communication device includes a processor and a memory. The memory is stored with a computer program; and the processor is configured to execute the computer program stored in the memory, so that the communication device performs the method as described in the first aspect.

In an eighth aspect, embodiments of the disclosure provide a communication device. The communication device includes a processor and a memory. The memory is stored with a computer program; and the processor is configured to execute the computer program stored in the memory, so that the communication device performs the method as described in the second aspect.

In a ninth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the first aspect.

In a tenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the second aspect.

In an eleventh aspect, embodiments of the disclosure provide a system for processing consistent LBT failure. The system includes the terminal as described in the third aspect and the network device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

In a twelfth aspect, embodiments of the disclosure provide a computer-readable storage medium. The computer-readable storage medium is configured to store instructions used by the terminal. When the instructions are executed, the terminal performs the method as described in the first aspect.

In a thirteenth aspect, embodiments of the disclosure provide a computer-readable storage medium. The computer-readable storage medium is configured to store instructions used by the network device. When the instructions are executed, the network device performs the method as described in the second aspect.

In a fourteenth aspect, embodiments of the disclosure provide a computer program product including a computer program. When the computer program is running on a computer, the computer is caused to perform the method as described in the first aspect.

In a fifteenth aspect, embodiments of the disclosure provide a computer program product including a computer program. When the computer program is running on a computer, the computer is caused to perform the method as described in the second aspect.

In a sixteenth aspect, embodiments of the disclosure provide a chip system. The chip system includes at least one processor and an interface, and is configured to support the terminal to perform functions involved in the first aspect, for example, to determine or process at least one of data or information involved in the above methods. In a possible design, the chip system further includes a memory. The memory is configured to save a necessary computer program and data for the terminal. The chip system may be constituted by a chip, or may include a chip and other discrete devices.

In a seventeenth aspect, embodiments of the disclosure provide a chip system. The chip system includes at least one processor and an interface, and is configured to support the network device to perform functions involved in the second aspect, for example, to determine or process at least one of data or information involved in the above methods. In a possible design, the chip system further includes a memory. The memory is configured to save a necessary computer program and data for the network device. The chip system may be constituted by a chip, or may include a chip and other discrete devices.

In an eighteenth aspect, embodiments of the disclosure provide a computer program. When the computer program is running on a computer, the computer is caused to perform the method as described in the first aspect.

In a nineteenth aspect, embodiments of the disclosure provide a computer program. When the computer program is running on a computer, the computer is caused to perform the method as described in the second aspect.

### BRIEF DESCRIPTION OF THE DRAWINGS

In order to explain technical solutions in the embodiments of the disclosure or the related art more clearly, the drawings needed for use in the embodiments of the disclosure or in the related art will be briefly introduced below.
FIG. 1 is a diagram illustrating an architecture of a communication system according to an embodiment of the disclosure.
FIG. 2 is a flow chart illustrating a method for processing consistent listen before talk (LBT) failure according to an embodiment of the disclosure.
FIG. 3 is a flow chart illustrating another method for processing consistent LBT failure according to an embodiment of the disclosure.
FIG. 4 is a flow chart illustrating another method for processing consistent LBT failure according to an embodiment of the disclosure.
FIG. 5 is a flow chart illustrating another method for processing consistent LBT failure according to an embodiment of the disclosure.
FIG. 6 is a block diagram illustrating a communication device according to an embodiment of the disclosure.
FIG. 7 is a block diagram illustrating another communication device according to an embodiment of the disclosure.
FIG. 8 is a block diagram illustrating a chip according to an embodiment of the disclosure.

### DETAILED DESCRIPTION

Embodiments of the disclosure are described in detail below, and examples of the embodiments are illustrated in the accompanying drawings, throughout which the same or similar symbols indicate the same or similar components or components with the same or similar functions. The embodiments described below with reference to the accompanying drawings are exemplary and are intended to be used to explain the disclosure and are not to be construed as a limitation of the disclosure. In the description of the disclosure, unless otherwise specified, "/" indicates an "or" relationship. For example, A/B indicates A or B; the term "and/or" in this text is simply a way of describing an association relationship of associated objects, indicating that there may be three types of relationships. For example, A and/or B may mean: A exists alone, A and B exist at the same time, and B exists alone.

It should be noted that in the disclosure, the method in any embodiment may be performed individually, or in combination with possible implementations of other embodiments, or in combination with any technical solution in the related art.

To facilitate understanding, terms related to the disclosure is first introduced.

### 1. Listen before talk (LBT).

In new-radio in unlicensed spectrum (NR-U), when accessing an uplink channel or a downlink channel, a terminal needs to first perform the LBT. That is, the terminal must first sense the communication channel to determine whether the channel is busy. If the channel is detected to be busy, the LBT fails, and the terminal needs to wait for a period of time before performing the LBT again.

### 2. Consistent LBT Failure.

If a terminal detects that the channel is busy during the LBT, the terminal determines that the LBT has failed, and the terminal counts the number of LBT failures on the physical resources used for sidelink (SL) communication. The network device configures a maximum number of consistent LBT failures and a consistent LBT failure detection timer for the terminal. The terminal maintains an LBT counter variable for each cell, with an initial value of 0. For each activated cell with the above configuration, when the terminal receives an LBT failure indication delivered by the physical layer, the terminal increments the LBT_counter by 1. When the LBT_counter is greater than or equal to the maximum number of consistent LBT failures, consistent LBT failure is determined. When the consistent LBT failure detection timer expires, the terminal resets the LBT_counter to 0 and restarts counting.

In order to better understand the method for processing consistent LBT failure in embodiments of the disclosure, a communication system to which embodiments of the disclosure are applicable is described below.

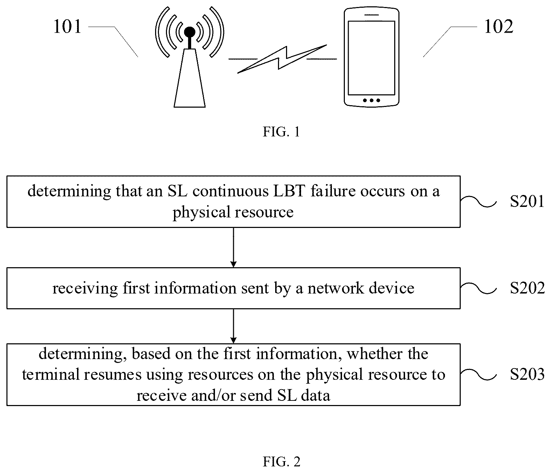

FIG. 1 is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in practical applications. The communication system as illustrated in FIG. 1 includes one network device 101 and one terminal 102 for example.

It needs to be noted that the technical solution in embodiments of the disclosure is applicable to various communication systems, such as a long term evolution (LTE) system, a 5th generation (5G) mobile communication system, a 5G new radio (NR) system or other future new mobile communication systems.

The network device 101 in embodiments of the disclosure is an entity, at a network side, for transmitting or receiving a signal. For example, the network device 101 may be an evolved NodeB (eNB), a transmission reception point (TRP), a next generation NodeB (gNB) in a NR system, a base station in other future mobile communication systems, an access node in a wireless fidelity (WiFi) system, or the like. A specific technology and a specific device form adopted by the network device are not limited in embodiments of the disclosure. The network device according to embodiments of the disclosure may consist of a central unit (CU) and a distributed unit (DU). The CU may also be referred to as a control unit. The protocol layers of the network device, such as a base station, may be split by using a structure of the CU-DU, so that the functions for a part of the protocol layers are placed in the CU for central control, and functions of a remaining part or all of the protocol layers are distributed in the DU, and the DU is centrally controlled by the CU.

The terminal 102 in embodiments of the disclosure is an entity, at a user side, for receiving or transmitting a signal, for example, a mobile phone. The terminal may be referred to as a user equipment (UE), a mobile station (MS), a mobile terminal (MT), etc. The terminal may be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology and a specific device form adopted by the terminal are not limited in embodiments of the disclosure.

It may be understood that the communication system described in embodiments of the disclosure is intended to explain technical solutions of embodiments of the disclosure more clearly, and does not constitute a limitation to the technical solutions provided by embodiments of the disclosure. Those skilled in the art may know that, with evolution of a system architecture and emergence of a new service scenario, the technical solutions provided in embodiments of the disclosure are also applicable to similar technical problems.

A method and an apparatus for processing consistent LBT failure provided in the disclosure are described in detail below with reference to the accompanying drawings.

Please refer to FIG. 2, which is a flow chart illustrating a method for processing consistent LBT failure according to an embodiment of the disclosure. The method is performed by a terminal. As shown in FIG. 2, the method may include but is not limited to the following steps S201 to S203.

At step S201, it is determined that an SL consistent LBT failure occurs on a physical resource.

For example, a network device configures a maximum number of consistent LBT failures and a consistent LBT failure detection timer for the terminal. The terminal maintains a consistent LBT failure counter with an initial count value of 0. When the count value of the consistent LBT failure counter is greater than or equal to the maximum number of consistent LBT failures, and the consistent LBT failure detection timer has not expired, it is determined that the SL consistent LBT failure occurs on the physical resource.

In an embodiment of the disclosure, the physical resource is a communication resource required for the terminal to perform SL communication.

At step S202, first information sent by a network device is received.

For example, the terminal receives the first information sent by the network device.

At step S203, whether the terminal resumes using resources on the physical resource to receive and/or send SL data is determined based on the first information.

In an embodiment of the disclosure, the resources on the physical resource are SL resources.

For example, a plurality of different processing methods for consistent LBT failure are pre-configured. Each different processing method relies on different first information for processing. The terminal determines the method for processing consistent LBT failure to be executed based on the determined first information, and thus determines whether to resume using the resources on the physical resource to receive and/or send the SL data.

As an example, the terminal determines, based on the first information, whether the terminal resumes using the resources on the physical resource to receive the SL data.

As another example, the terminal determines, based on the first information, whether the terminal resumes using the resources on the physical resource to send the SL data.

As yet another example, the terminal determines, based on the first information, whether the terminal resumes using the resources on the physical resource to both receive and send the SL data.

In some embodiments of the disclosure, if the terminal determines to resume using the resources on the physical resource to receive and/or send the SL data, then the terminal selects the physical resource during resource selection or resource reselection.

In an embodiment of the disclosure, the SL data includes at least one of: a physical sidelink shared channel (PSSCH), a physical sidelink control channel (PSCCH), a physical sidelink feedback channel (PSFCH), or a synchronization signal block (SSB).

By implementing the embodiments of the disclosure, when determining that the SL consistent LBT failure occurs on the physical resource, the terminal determines, based on the determined first information, whether to resume using the resources on the physical resource to receive and/or send the SL data. Thus, the terminal may timely resume SL communication on the physical resource, improving the communication efficiency of the SL communication for the terminal and avoiding waste of communication resources.

In some embodiments of the disclosure, an allocation mode of SL transmission resources for the terminal is to autonomously select the SL transmission resources. The terminal is in at least one of the following states: a radio resource control (RRC) connected state; an RRC idle state; an RRC inactive state; or an out-of-coverage state.

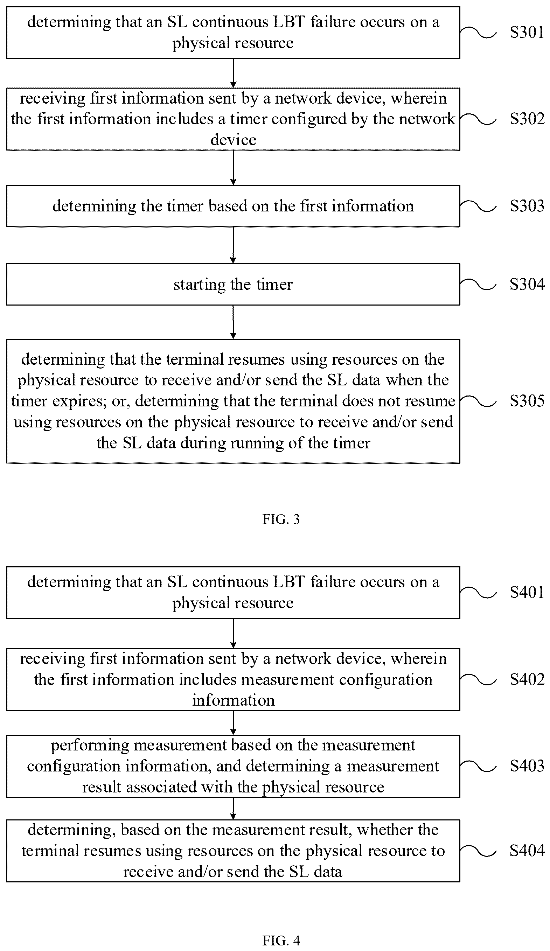

In an implementation, the terminal receives first information including a timer sent by the network device, and thus determines whether to use the resources on the physical resource to receive and/or send the SL data based on the timer. As an example, please refer to FIG. 3, which is a flow chart illustrating another method for processing consistent LBT failure according to an embodiment of the disclosure. The method is performed by a terminal. As shown in FIG. 3, the method may include but is not limited to the following steps S301 to S305.

At step S301, it is determined that an SL consistent LBT failure occurs on a physical resource.

In embodiments of the disclosure, step S301 may be implemented in any manner described in various embodiments of the disclosure, which is not limited here and will not be repeated.

In an embodiment of the disclosure, the physical resource includes at least one of: a bandwidth part (BWP); a resource pool; or a resource block (RB) set.

In an embodiment of the disclosure, the resource pool refers to a physical resource pool composed of physical resources that may be used for SL communication.

At step S302, first information sent by a network device is received, in which the first information includes a timer configured by the network device.

For example, the terminal receives the first information sent by the network device. The first information includes the timer configured by the network device. The timer is a timer indicating whether the terminal can resume using resources on the physical resource to receive and/or send the SL data after the SL consistent LBT failure occurs on the physical resource.

In an embodiment of the disclosure, the timer is configured based on a specified granularity. The specified granularity is at least one of: a BWP granularity; a resource pool granularity; an RB set granularity; or a terminal granularity.

As an example, the specified granularity is the BWP granularity, and different timers are configured for different BWPs. Thus, the terminal determines a timer length associated with the BWP based on the timer configuration associated with the BWP. The timer lengths associated with different BWPs may be the same or different.

As another example, the specified granularity is the resource pool granularity, and different timers are configured for different resource pools. Thus, the terminal determines a timer length associated with the resource pool based on the timer configuration associated with the resource pool. The timer lengths associated with different resource pools may be the same or different.

As yet another example, the specified granularity is the resource block set granularity, and different timers are configured for different resource block sets. Thus, the terminal determines a timer length associated with the resource block set based on the timer configuration associated with the resource block set. The timer lengths associated with different resource block sets may be the same or different.

As still yet another example, the specified granularity is the terminal granularity, and different timers are configured for different terminals. Thus, the terminal determines a timer length associated with the terminal based on the timer configuration associated with the terminal. The timer lengths associated with different terminals may be the same or different.

In some embodiments of the disclosure, the terminal also determines the timer length based on the implementation.

At step S303, the timer is determined based on the first information.

For example, the terminal determines the length of the timer based on the first information.

At step S304, the timer is started.

For example, the terminal starts the timer to begin timing.

At step S305, it is determined that the terminal resumes using resources on the physical resource to receive and/or send the SL data when the timer expires; or it is determined that the terminal does not resume using resources on the physical resource to receive and/or send the SL data during running of the timer.

In an embodiment of the disclosure, the resources on the physical resource are SL resources. As an example, the terminal determines to resume using the resources on the physical resource to receive the SL data when the timer expires.

As another example, the terminal determines to resume using the resources on the physical resource to send the SL data when the timer expires.

As another example, the terminal determines to resume using the resources on the physical resource to both receive and send the SL data when the timer expires.

As another example, the terminal determines not to resume using the resources on the physical resource to receive the SL data during running of the timer.

As another example, the terminal determines not to resume using the resources on the physical resource to send the SL data during running of the timer.

As another example, the terminal determines not to resume using the resources on the physical resource to receive or send the SL data during running of the timer.

Optionally, the method may further include: determining that the timer expires; and determining that the physical resource cancels an SL consistent LBT failure state.

Optionally, starting the timer includes: determining that the SL consistent LBT failure occurs on the physical resource; and starting the timer associated with the physical resource.

As an example, if an SL consistent LBT failure detection granularity is the BWP granularity, the terminal determines that the SL consistent LBT failure occurs on the BWP, and starts the timer associated with the BWP.

As another example, if an SL consistent LBT failure detection granularity is the resource pool granularity, the terminal determines that the SL consistent LBT failure occurs on the resource pool, and starts the timer associated with the resource pool.

As another example, if an SL consistent LBT failure detection granularity is the resource block set granularity, the terminal determines that the SL consistent LBT failure occurs on the resource block set, and starts the timer associated with the resource block set.

It should be noted that, in embodiments of the disclosure, the granularity used for configuring the timer and the granularity used for maintaining the timer may be the same or different.

As an example, the granularity used for configuring the timer is the same as the granularity used for maintaining the timer. The granularity used for configuring the timer and the granularity used for maintaining the timer are the resource pool granularity. That is, when the terminal determines that the SL consistent LBT failure occurs on the resource pool, the terminal starts the timer associated with the resource pool. It may be understood that, since the granularity used for configuring the timer is the resource pool granularity, the length of the timer associated with the resource pool is determined based on the length of the timer configured for that resource pool.

As another example, the granularity used for configuring the timer is different from the granularity used for maintaining the timer. The granularity used for configuring the timer is the BWP granularity, and the granularity used for maintaining the timer is the resource pool granularity. That is, when the terminal determines that the SL consistent LBT failure occurs on the resource pool, the terminal starts the timer associated with the resource pool. It may be understood that, since the granularity used for configuring the timer is the BWP granularity, the length of the timer associated with the resource pool is determined based on the length of the timer configured for the BWP to which the resource pool belongs.

It may be understood that there are two allocation modes for transmission resources in SL communication: one is dynamic scheduling by the network (mode 1), and the other is autonomously selecting the SL transmission resources by the terminal within a resource pool configured by the network or pre-configured (mode 2). The terminal mentioned in the embodiments of the disclosure refers to the terminal operating in mode 2.

It should be noted that, in an embodiment of the disclosure, the terminal is in at least one of the following states: an RRC connected state; an RRC idle state; an RRC inactive state; or an out-of-coverage state. In this case, the terminal obtains the first information including the timer and performs the consistent LBT failure processing based on the first information.

That is, the method for processing consistent LBT failure provided in the embodiments of the disclosure is applicable to the terminal in mode 2, in which the terminal is in at least one of the following states: the RRC connected state; the RRC idle state; the RRC inactive state; or the out-of-coverage state.

As an example, when the terminal in mode 2 is in at least one of the RRC connected state, the RRC idle state, the RRC inactive state, or the out-of-coverage state, and determines that the SL consistent LBT failure occurs on the physical resource, the terminal performs the method for processing consistent LBT failure in the embodiments of the disclosure based on the first information including the timer. Specifically, when the terminal in mode 2, is in at least one of the RRC connected state, the RRC idle state, the RRC inactive state, or the out-of-coverage state, and determines that the SL consistent LBT failure occurs on the physical resource, the terminal starts the timer associated with the physical resource. As an example, if the SL consistent LBT failure detection granularity is the resource pool granularity, the terminal determines that the SL consistent LBT failure occurs on the resource pool, and starts the timer associated with that resource pool. The terminal is a terminal in mode 2, and the terminal is in at least one of the RRC connected state, the RRC idle state, the RRC inactive state, or the out-of-coverage state.

As an example, when the terminal in mode 2 is in at least one of the RRC idle state, the RRC inactive state, or the out-of-coverage state, and determines that the SL consistent LBT failure occurs on the physical resource, the terminal performs the method for processing consistent LBT failure in the embodiments of the disclosure based on the first information including the timer. Specifically, when the terminal in mode 2 is in at least one of the RRC idle state, the RRC inactive state, or the out-of-coverage state, and determines that the SL consistent LBT failure occurs on the physical resource, the terminal starts the timer associated with the physical resource. As an example, if the SL consistent LBT failure detection granularity is the resource pool granularity, the terminal determines that the SL consistent LBT failure occurs on the resource pool, and starts the timer associated with that resource pool. The terminal is a terminal in mode 2, and the terminal is in at least one of the RRC idle state, the RRC inactive state, or the out-of-coverage state.

As another example, when the terminal in mode 2 is in the RRC connected state, and determines that the SL consistent LBT failure occurs on the physical resource, the terminal sends an SL consistent LBT failure media access control (MAC) control element (CE) to the network device. The SL consistent LBT failure MAC CE includes an SL consistent LBT failure indication for the physical resource. Thus, when the SL consistent LBT failure MAC CE is successfully sent, specifically, when the terminal generates a MAC protocol data unit (PDU) including the SL consistent LBT failure MAC CE or when the terminal sends the MAC PDU including the SL consistent LBT failure MAC CE, the terminal starts the timer associated with the physical resource.

It should be noted that, in embodiments of the disclosure, the method for obtaining the first information differs depending on the state of the terminal.

As an example, when the terminal is in the RRC connected state, the terminal obtains the first information via a dedicated signaling.

As an example, when the terminal is in the RRC idle state or the RRC inactive state, the terminal obtains the first information via a signaling in band (SIB).

As another example, when the terminal is in the out-of-coverage state, the terminal obtains the first information via pre-configuration.

By implementing the embodiments of the disclosure, when determining that the SL consistent LBT failure occurs on the physical resource, the terminal determines, based on the timer configured by the network device, whether to resume using the resources on the physical resource to receive and/or send the SL data. Thus, the terminal may timely resume SL communication on the physical resource, improving the communication efficiency of the SL communication for the terminal.

In an implementation, the terminal receives first information including measurement configuration information sent by the network device, and thus determines whether to use the resources on the physical resource to receive and/or send the SL data based on the measurement configuration information. As an example, please refer to FIG. 4, which is a flow chart illustrating another method for processing consistent LBT failure according to an embodiment of the disclosure. The method is performed by a terminal. As shown in FIG. 4, the method may include but is not limited to the following steps S401 to S404.

At step S401, it is determined that an SL consistent LBT failure occurs on a physical resource.

In embodiments of the disclosure, step S401 may be implemented in any manner described in various embodiments of the disclosure, which is not limited here and will not be repeated.

At step S402, first information sent by a network device is received, in which the first information includes measurement configuration information.

For example, the terminal receives the first information sent by the network device. The first information includes the measurement configuration information. The measurement configuration information indicates the terminal to perform measurement on relevant communication metrics after the SL consistent LBT failure occurs.

It should be noted that, in embodiments of the disclosure, the terminal may adjust the sequence of executing step S401 and step S402 based on implementation. That is, the terminal may execute step S401 first and then step S402; or the terminal may execute step S402 first and then step S401; or the terminal may execute step S401 and step S402 simultaneously.

At step S403, measurement is performed based on the measurement configuration information, and a measurement result associated with the physical resource is determined.

For example, the terminal performs measurement on communication metrics of the physical resource based on the configuration information included in the first information, and obtains a measurement result.

At step S404, whether the terminal resumes using resources on the physical resource to receive and/or send SL data is determined based on the measurement result.

In an embodiment of the disclosure, the resources on the physical resource are SL resources.

As an example, the terminal determines whether communication meets a normal SL communication requirement based on the measurement result, and determines whether the terminal resumes using the resources on the physical resource to receive the SL data.

As another example, the terminal determines whether the communication metrics meet the normal SL communication requirement based on the measurement result, and determines whether the terminal resumes using the resources on the physical resource to receive the SL data.

As another example, the terminal determines whether the communication metrics meet the normal SL communication requirements based on the measurement result, and determines whether the terminal resumes using the resources on the physical resource to send and receive the SL data.

Optionally, determining, based on the measurement result, whether the terminal resumes using the resources on the physical resource to receive and/or send the SL data, includes: determining that the measurement result is less than or equal to a preset threshold, and determining that the terminal resumes using the resources on the physical resource to receive and/or send the SL data; or determining that the measurement result is greater than or equal to a preset threshold, and determining that the terminal does not resume using the resources on the physical resource to receive and/or send the SL data.

In an embodiment of the disclosure, the preset threshold is configured by the network device or determined by the terminal based on implementation.

As an example, the terminal determines that the measurement result is less than or equal to the preset threshold, and determines to resume using the resources on the physical resource to receive the SL data.

As another example, the terminal determines that the measurement result is less than or equal to the preset threshold, and determines to resume using the resources on the physical resource to send the SL data.

As another example, the terminal determines that the measurement result is less than or equal to the preset threshold, and determines to resume using the resources on the physical resource to receive and send the SL data.

As another example, the terminal determines that the measurement result is greater than or equal to the preset threshold, and determines not to resume using the resources on the physical resource to receive the SL data.

As another example, the terminal determines that the measurement result is greater than or equal to the preset threshold, and determines not to resume using the resources on the physical resource to send the SL data.

As another example, the terminal determines that the measurement result is greater than or equal to the preset threshold, and determines not to resume using the resources on the physical resource to receive or send the SL data.

Optionally, the measurement includes at least one of: received signal strength indicator (RSSI) measurement; channel occupancy (CO) measurement; or channel busy rate (CBR) measurement.

It should be noted that, in an embodiment of the disclosure, when the measurement is any one of the RSSI measurement, the CO measurement, or the CBR measurement, the network device configures corresponding preset thresholds for the RSSI, the CO, or the CBR respectively. The terminal determines that the measurement result is less than or equal to the preset threshold, and determines to resume using the resources on the physical resource to receive and/or send the SL data. Alternatively, the terminal determines that the measurement result is greater than or equal to the preset threshold, and determines not to resume using the resources on the physical resource to receive and/or send the SL data.

For example, the measurement is the RSSI measurement, and the network device configures a preset threshold corresponding to the RSSI for the terminal. The terminal determines that an RSSI measurement result is less than or equal to the preset threshold corresponding to the RSSI, and determines to resume using the resources on the physical resource to receive and/or send the SL data. Alternatively, the terminal determines that the RSSI measurement result is greater than or equal to the preset threshold corresponding to the RSSI, and determines not to resume using the resources on the physical resource to receive and/or send the SL data.

For example, the measurement is the CO measurement, and the network device configures a preset threshold corresponding to the CO for the terminal. The terminal determines that a CO measurement result is less than or equal to the preset threshold corresponding to the CO, and determines to resume using the resources on the physical resource to receive and/or send the SL data. Alternatively, the terminal determines that the CO measurement result is greater than or equal to the preset threshold corresponding to the CO, and determines not to resume using the resources on the physical resource to receive and/or send the SL data.

For example, the measurement is the CBR measurement, and the network device configures a preset threshold corresponding to the CBR for the terminal. The terminal determines that a CBR measurement result is less than or equal to the preset threshold corresponding to the CBR, and determines to resume using the resources on the physical resource to receive and/or send the SL data. Alternatively, the terminal determines that the CBR measurement result is greater than or equal to the preset threshold corresponding to the CBR, and determines not to resume using the resources on the physical resource to receive and/or send the SL data.

It should be noted that, in an embodiment of the disclosure, when the measurement includes any two or three of the RSSI measurement, the CO measurement, and the CBR measurement, the network device configures different preset thresholds for each item, or the network device configures the same preset threshold for each item. This is not limited in the embodiments of the disclosure.

As an example, the measurement includes the RSSI measurement and the CO measurement, and the network device configures a preset threshold corresponding to the RSSI and a preset threshold corresponding to the CO for the terminal. The preset threshold corresponding to the RSSI and the preset threshold corresponding to the CO may be the same or different.

As another example, the measurement includes the CO measurement and the CBR measurement, and the network device configures a preset threshold corresponding to the CO and a preset threshold corresponding to the CBR for the terminal. The preset threshold corresponding to the CO and the preset threshold corresponding to the CBR may be the same or different.

As another example, the measurement includes the RSSI measurement and the CBR measurement, and the network device configures a preset threshold corresponding to the RSSI and a preset threshold corresponding to the CBR for the terminal. The preset threshold corresponding to the RSSI and the preset threshold corresponding to the CBR may be the same or different.

As another example, the measurement includes the RSSI measurement, the CO measurement, and the CBR measurement, and the network device configures a preset threshold corresponding to the RSSI, a preset threshold corresponding to the CO, and a preset threshold corresponding to the CBR for the terminal. The preset threshold corresponding to the RSSI, the preset threshold corresponding to the CO, and the preset threshold corresponding to the CBR may be the same or different.

In some embodiments of the disclosure, when the measurement includes any two of the RSSI measurement, the CO measurement, and the CBR measurement, if at least one of the two measurement results is less than or equal to the corresponding preset threshold, it can be determined that the measurement result is less than or equal to the preset threshold, and if both of the two measurement results are greater than or equal to the corresponding preset thresholds, it is determined that the measurement result is greater than or equal to the preset threshold.

As an example, the measurement includes the RSSI measurement and the CO measurement, the terminal determines that an RSSI measurement result is less than or equal to the preset threshold corresponding to the RSSI, and/or a CO measurement result is less than or equal to the preset threshold corresponding to the CO, and determines to resume using the resources on the physical resource to receive and/or send the SL data.

As another example, the measurement includes the RSSI measurement and the CBR measurement, the terminal determines that an RSSI measurement result is less than or equal to the preset threshold corresponding to the RSSI, and/or a CBR measurement result is less than or equal to the preset threshold corresponding to the CBR, and determines to resume using the resources on the physical resource to receive and/or send the SL data.

As another example, the measurement includes the CO measurement and the CBR measurement, the terminal determines that a CO measurement result is less than or equal to the preset threshold corresponding to the CO, and/or a CBR measurement result is less than or equal to the preset threshold corresponding to the CBR, and determines to resume using the resources on the physical resource to receive and/or send the SL data.

As another example, the measurement includes the RSSI measurement and the CO measurement, the terminal determines that an RSSI measurement result is greater than or equal to the preset threshold corresponding to the RSSI, and a CO measurement result is greater than or equal to the preset threshold corresponding to the CO, and determines not to resume using the resources on the physical resource to receive and/or send the SL data.

As another example, the measurement includes the RSSI measurement and the CBR measurement, the terminal determines that an RSSI measurement result is greater than or equal to the preset threshold corresponding to the RSSI, and a CBR measurement result is greater than or equal to the preset threshold corresponding to the CBR, and determines not to resume using the resources on the physical resource to receive and/or send the SL data.

As another example, the measurement includes the CO measurement and the CBR measurement, the terminal determines that a CO measurement result is greater than or equal to the preset threshold corresponding to the CO, and a CBR measurement result is greater than or equal to the preset threshold corresponding to the CBR, and determines not to resume using the resources on the physical resource to receive and/or send the SL data.

In some embodiments of the disclosure, when the measurement includes any two of the RSSI measurement, the CO measurement, and the CBR measurement, if both of the two measurement results are less than or equal to the corresponding preset thresholds, it can be determined that the measurement result is less than or equal to the preset threshold. If at least one of the two measurement results is greater than or equal to the corresponding preset threshold, it can be determined that the measurement result is greater than or equal to the preset threshold.

As an example, the measurement includes the RSSI measurement and the CO measurement, the terminal determines that an RSSI measurement result is less than or equal to the preset threshold corresponding to the RSSI, and a CO measurement result is less than or equal to the preset threshold corresponding to the CO, and determines to resume using the resources on the physical resource to receive and/or send the SL data.

As another example, the measurement includes the RSSI measurement and the CBR measurement, the terminal determines that an RSSI measurement result is less than or equal to the preset threshold corresponding to the RSSI, and a CBR measurement result is less than or equal to the preset threshold corresponding to the CBR, and determines to resume using the resources on the physical resource to receive and/or send the SL data.

As another example, the measurement includes the CO measurement and the CBR measurement, the terminal determines that a CO measurement result is less than or equal to the preset threshold corresponding to the CO, and a CBR measurement result is less than or equal to the preset threshold corresponding to the CBR, and determines to resume using the resources on the physical resource to receive and/or send the SL data.

As an example, the measurement includes the RSSI measurement and the CO measurement, the terminal determines that an RSSI measurement result is greater than or equal to the preset threshold corresponding to the RSSI, and/or a CO measurement result is greater than or equal to the preset threshold corresponding to the CO, and determines not to resume using the resources on the physical resource to receive and/or send the SL data.

As another example, the measurement includes the RSSI measurement and the CBR measurement, the terminal determines that an RSSI measurement result is greater than or equal to the preset threshold corresponding to the RSSI, and/or a CBR measurement result is greater than or equal to the preset threshold corresponding to the CBR, and determines not to resume using the resources on the physical resource to receive and/or send the SL data.

As another example, the measurement includes the CO measurement and the CBR measurement, the terminal determines that a CO measurement result is greater than or equal to the preset threshold corresponding to the CO, and/or a CBR measurement result is greater than or equal to the preset threshold corresponding to the CBR, and determines not to resume using the resources on the physical resource to receive and/or send the SL data.

In some embodiments of the disclosure, when the measurement includes all three of the RSSI measurement, the CO measurement, and the CBR measurement, if the measurement result of the RSSI measurement, the measurement result of the CO measurement, and the measurement result of the CBR measurement are all less than or equal to the corresponding preset thresholds, it can be determined that the measurement result is less than or equal to the preset threshold. If at least one of the three measurement results is greater than or equal to the corresponding preset threshold, it can be determined that the measurement result is greater than or equal to the preset threshold. The terminal determines that an RSSI measurement result is less than or equal to the preset threshold corresponding to the RSSI, and a CO measurement result is less than or equal to the preset threshold corresponding to the CO, and a CBR measurement result is less than or equal to the preset threshold corresponding to the CBR, and determines to resume using the resources on the physical resource to receive and/or send the SL data. Alternatively, the terminal determines that an RSSI measurement result is greater than or equal to the preset threshold corresponding to the RSSI, and/or a CO measurement result is greater than or equal to the preset threshold corresponding to the CO, and/or a CBR measurement result is greater than or equal to the preset threshold corresponding to the CBR, and determines not to resume using the resources on the physical resource to receive and/or send the SL data.

In some embodiments of the disclosure, when the measurement includes all three of the RSSI measurement, the CO measurement, and the CBR measurement, if any two of the measurement result of the RSSI measurement, the measurement result of the CO measurement, and the measurement result of the CBR measurement are both less than or equal to the corresponding preset thresholds, it can be determined that the measurement result is less than or equal to the preset threshold.

As an example, the measurement includes the RSSI measurement, the CO measurement, and the CBR measurement, the terminal determines that an RSSI measurement result is less than or equal to the preset threshold corresponding to the RSSI, and a CO measurement result is less than or equal to the preset threshold corresponding to the CO, and determines to resume using the resources on the physical resource to receive and/or send the SL data.

As another example, the measurement includes the RSSI measurement, the CO measurement, and the CBR measurement, the terminal determines that an RSSI measurement result is less than or equal to the preset threshold corresponding to the RSSI, and a CBR measurement result is less than or equal to the preset threshold corresponding to the CBR, and determines to resume using the resources on the physical resource to receive and/or send the SL data.

As another example, the measurement includes the RSSI measurement, the CO measurement, and the CBR measurement, the terminal determines that a CO measurement result is less than or equal to the preset threshold corresponding to the CO, and a CBR measurement result is less than or equal to the preset threshold corresponding to the CBR, and determines to resume using the resources on the physical resource to receive and/or send the SL data.

In some embodiments of the disclosure, when the measurement includes all three of the RSSI measurement, the CO measurement, and the CBR measurement, if any two of the measurement result of the RSSI measurement, the measurement result of the CO measurement, and the measurement result of the CBR measurement are both greater than or equal to the corresponding preset thresholds, it can be determined that the measurement result is greater than or equal to the preset threshold.

As an example, the measurement includes the RSSI measurement, the CO measurement, and the CBR measurement, the terminal determines that an RSSI measurement result is greater than or equal to the preset threshold corresponding to the RSSI, and a CO measurement result is greater than or equal to the preset threshold corresponding to the CO, and determines not to resume using the resources on the physical resource to receive and/or send the SL data.

As another example, the measurement includes the RSSI measurement, the CO measurement, and the CBR measurement, the terminal determines that an RSSI measurement result is greater than or equal to the preset threshold corresponding to the RSSI, and a CBR measurement result is greater than or equal to the preset threshold corresponding to the CBR, and determines not to resume using the resources on the physical resource to receive and/or send the SL data.

As another example, the measurement includes the RSSI measurement, the CO measurement, and the CBR measurement, the terminal determines that a CO measurement result is greater than or equal to the preset threshold corresponding to the CO, and a CBR measurement result is greater than or equal to the preset threshold corresponding to the CBR, and determines not to resume using the resources on the physical resource to receive and/or send the SL data.

In some embodiments of the disclosure, when the measurement includes all three of the RSSI measurement, the CO measurement, and the CBR measurement, if any one of the measurement result of the RSSI measurement, the measurement result of the CO measurement, and the measurement result of the CBR measurement is less than or equal to the corresponding preset threshold, it can be determined that the measurement result is less than or equal to the preset threshold. If all three measurement results of the RSSI measurement, the CO measurement, and the CBR measurement are greater than or equal to the corresponding preset thresholds, it can be determined that the measurement result is greater than or equal to the preset threshold.

As an example, the measurement includes the RSSI measurement, the CO measurement, and the CBR measurement, the terminal determines that an RSSI measurement result is less than or equal to the preset threshold corresponding to the RSSI, and determines to resume using the resources on the physical resource to receive and/or send the SL data.

As another example, the measurement includes the RSSI measurement, the CO measurement, and the CBR measurement, the terminal determines that a CBR measurement result is less than or equal to the preset threshold corresponding to the CBR, and determines to resume using the resources on the physical resource to receive and/or send the SL data.

As another example, the measurement includes the RSSI measurement, the CO measurement, and the CBR measurement, the terminal determines that a CO measurement result is less than or equal to the preset threshold corresponding to the CO, and determines to resume using the resources on the physical resource to receive and/or send the SL data.

As another example, the measurement includes the RSSI measurement, the CO measurement, and the CBR measurement, the terminal determines that an RSSI measurement result is greater than or equal to the preset threshold corresponding to the RSSI, and a CO measurement result is greater than or equal to the preset threshold corresponding to the CO, and a CBR measurement result is greater than or equal to the preset threshold corresponding to the CBR, and determines not to resume using the resources on the physical resource to receive and/or send the SL data.

It may be understood that there are two allocation modes for transmission resources in SL communication: one is dynamic scheduling by the network (mode 1), and the other is autonomously selecting the SL transmission resources by the terminal within a resource pool configured by the network or pre-configured (mode 2). The terminal mentioned in the embodiments of the disclosure refers to the terminal operating in mode 2.

It should be noted that, in embodiments of the disclosure, the terminal is in at least one of the following states: an RRC idle state; an RRC inactive state; or an out-of-coverage state. In this case, the terminal obtains the first information including the measurement configuration information and performs the consistent LBT failure processing based on the first information.

That is, the method for processing consistent LBT failure provided in the embodiments of the disclosure is applicable to the terminal in mode 2, in which the terminal is in at least one of the RRC idle state, the RRC inactive state, or the out-of-coverage state.

As an example, when the terminal in mode 2 is in at least one of the RRC idle state, the RRC inactive state, or the out-of-coverage state, and determines that the SL consistent LBT failure occurs on the physical resource, the terminal performs the method for processing consistent LBT failure in the embodiments of the disclosure based on the first information including the measurement configuration information.

As an example, in an embodiment of the disclosure, the terminal is in at least one of the following states: the RRC connected state; the RRC idle state; the RRC inactive state; or the out-of-coverage state. In this case, the terminal obtains the first information including the measurement configuration information and performs the consistent LBT failure processing based on the first information. That is, the method for processing consistent LBT failure provided in the embodiments of the disclosure is applicable to the terminal in mode 2, in which the terminal is in at least one of the following states: the RRC connected state; the RRC idle state; the RRC inactive state; or the out-of-coverage state. When the terminal in mode 2 is in at least one of the RRC connected state, the RRC idle state, the RRC inactive state, or the out-of-coverage state, and determines that the SL consistent LBT failure occurs on the physical resource, the terminal performs the method for processing consistent LBT failure in the embodiments of the disclosure based on the first information including the measurement configuration information.

It should be noted that, in embodiments of the disclosure, the method for obtaining the first information differs depending on the state of the terminal.

As an example, when the terminal is in the RRC idle state or the RRC inactive state, the terminal obtains the first information via the SIB.

As another example, when the terminal is in the out-of-coverage state, the terminal obtains the first information via pre-configuration.

As another example, when the terminal is in the RRC connected state, the terminal obtains the first information via a dedicated signaling.

By implementing the embodiments of the disclosure, when determining that the SL consistent LBT failure occurs on the physical resource, the terminal determines, based on the measurement configuration information, whether to resume using the resources on the physical resource to receive and/or send the SL data. Thus, the terminal may timely resume SL communication on the physical resource, improving the communication efficiency of the SL communication for the terminal.

In an embodiment of the disclosure, an allocation mode of SL transmission resources for the terminal is to autonomously select the SL transmission resources.

It may be understood that there are two allocation modes for transmission resources in SL communication: one is dynamic scheduling by the network (mode 1), and the other is autonomously selecting the SL transmission resources by the terminal within a resource pool configured by the network or pre-configured (mode 2). The terminal mentioned in the embodiments of the disclosure refers to the terminal operating in mode 2.

In an embodiment of the disclosure, the terminal is in at least one of the following states: an RRC connected state; an RRC idle state; an RRC inactive state; or an out-of-coverage state.

In the embodiments provided in the disclosure above, the method for processing consistent LBT failure provided in the embodiments of the disclosure has been introduced from the perspective of the terminal. The method for processing consistent LBT failure provided in the embodiments of the disclosure will be further introduced from the perspective of the network device.

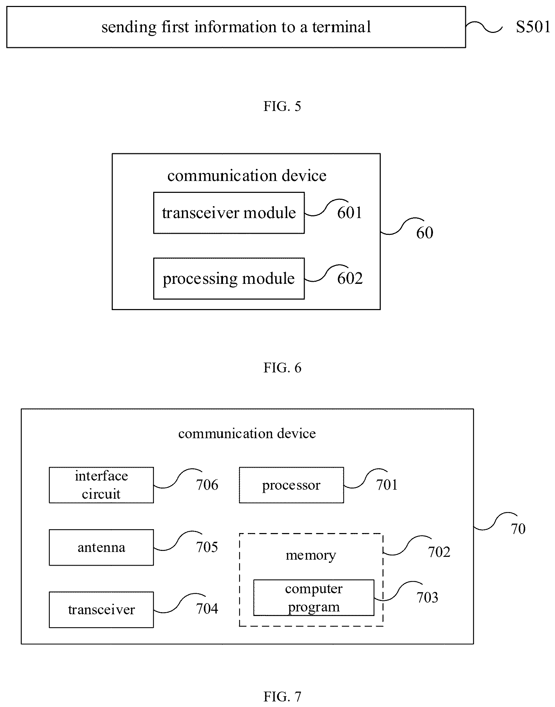

As an example, please refer to FIG. 5, which is a flow chart illustrating another method for processing consistent LBT failure according to an embodiment of the disclosure. The method is performed by a network device. As shown in FIG. 5, the method may include but is not limited to the following step S501.

At step S501, first information is sent to a terminal.

In an embodiment of the disclosure, the first information is used to indicate the terminal to determine, when determining that an SL consistent LBT failure occurs on a physical resource, whether the terminal resumes using resources on the physical resource to receive and/or send SL data.

In an embodiment of the disclosure, the resources on the physical resource are SL resources.

As an example, the network device sends the first information to the terminal. The first information is used to indicate the terminal to determine, when the consistent LBT failure occurs on the physical resource, whether the terminal resumes using the resources on the physical resource to receive the SL data.

As another example, the network device sends the first information to the terminal. The first information is used to indicate the terminal to determine, when the consistent LBT failure occurs on the physical resource, whether the terminal resumes using the resources on the physical resource to send the SL data.

As another example, the network device sends the first information to the terminal. The first information is used to indicate the terminal to determine, when the consistent LBT failure occurs on the physical resource, whether the terminal resumes using the resources on the physical resource to receive and send the SL data.

By implementing the embodiments of the disclosure, the network device sends the first information to the terminal, so that when determining that the SL consistent LBT failure occurs on the physical resource, the terminal determines, based on the first information, whether to resume using the resources on the physical resource to receive and/or send the SL data. Thus, the terminal may timely resume SL communication on the physical resource, improving the communication efficiency of the SL communication for the terminal and avoiding waste of communication resources.

In some embodiments of the disclosure, the first information includes a timer. The timer is used to indicate whether the terminal resumes using the resources on the physical resource to receive and/or send the SL data when the SL consistent LBT failure occurs on the physical resource.

As an example, the network device sends the first information including the timer to the terminal. The timer is used to indicate the terminal to determine, based on the method provided in the above embodiments of the disclosure (for example, the method provided in step S305), whether to resume using the resources on the physical resource to receive the SL data when the consistent LBT failure occurs on the physical resource.

As another example, the network device sends the first information including the timer to the terminal. The timer is used to indicate the terminal to determine, based on the method provided in the above embodiments of the disclosure, whether to resume using the resources on the physical resource to send the SL data when the consistent LBT failure occurs on the physical resource.

As another example, the network device sends the first information including the timer to the terminal. The timer is used to indicate the terminal to determine, based on the method provided in the above embodiments of the disclosure, whether to resume using the resources on the physical resource to receive and send the SL data when the consistent LBT failure occurs on the physical resource.

In an optional implementation, the physical resource includes any one of: a BWP; a resource pool; or an RB set.

In other embodiments of the disclosure, the first information includes measurement configuration information. The measurement configuration information is configured for the terminal to perform measurement on communication metrics associated with the physical resource to determine a measurement result, and the measurement result is used to indicate whether the terminal resumes using the resources on the physical resource to receive and/or send the SL data when the SL consistent LBT failure occurs on the physical resource.

As an example, the network device sends the first information including the measurement configuration information to the terminal. The terminal performs measurement on communication metrics associated with the physical resource based on the measurement configuration information, and obtains a measurement result. The measurement result is used to indicate the terminal to determine, based on the method provided in the above embodiments of the disclosure (for example, the method provided in step S404), whether to resume using the resources on the physical resource to receive the SL data.

As another example, the network device sends the first information including the measurement configuration information to the terminal. The terminal performs measurement on communication metrics associated with the physical resource based on the measurement configuration information, and obtains a measurement result. The measurement result is used to indicate the terminal to determine, based on the method provided in the above embodiments of the disclosure, whether to resume using the resources on the physical resource to send the SL data.

As another example, the network device sends the first information including the measurement configuration information to the terminal. The terminal performs measurement on communication metrics associated with the physical resource based on the measurement configuration information, and obtains a measurement result. The measurement result is used to indicate the terminal to determine, based on the method provided in the above embodiments of the disclosure, whether to resume using the resources on the physical resource to receive and send the SL data.

In an optional implementation, the measurement includes at least one of: RSSI measurement; CO measurement; or CBR measurement.

By implementing the embodiments of the disclosure, the network device sends the first information to the terminal, so that when the SL consistent LBT failure occurs on the physical resource, the terminal determines, based on the first information, whether to resume using the resources on the physical resource to receive and/or send the SL data. Thus, the terminal may timely resume SL communication on the physical resource, improving the communication efficiency of the SL communication for the terminal and avoiding waste of communication resources.

In the above embodiments provided in the disclosure, description is made to the method in the embodiments of the disclosure from the perspectives of the network device and the terminal respectively. In order to realize each of the functions in the method of the above embodiments of the disclosure, the network device and the terminal may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Referring to FIG. 7, FIG. 7 is a block diagram illustrating a communication device 70 according to an embodiment of the disclosure. The communication device 70 shown in FIG. 7 may include a transceiver module 701 and a processing module 702. The transceiver module 701 may include a sending module and/or a receiving module, the sending module is for realizing a sending function, and the receiving module is for realizing a receiving function, and the transceiver module 701 may realize the sending function and/or the receiving function.

The communication device 70 may be a terminal, an apparatus in the terminal, or an apparatus that may be used in conjunction with the terminal. Alternatively, the communication device 70 may be a network device, an apparatus in the network device, or an apparatus that may be used in conjunction with the network device.

In the case that the communication device 70 is the terminal, the processing module 702 is configured to determine that an SL consistent LBT failure occurs on a physical resource; the transceiver module 701 is configured to receive first information sent by a network device; and the processing module 702 is further configured to determine, based on the first information, whether the terminal resumes using resources on the physical resource to receive and/or send SL data.

In an implementation, the first information includes a timer configured by the network device; and the processing module 702 is specially configured to: determine the timer based on the first information; start the timer; determine that the terminal resumes using the resources on the physical resource to receive and/or send the SL data when the timer expires; or determine that the terminal does not resume using the resources the physical resource to receive and/or send the SL data during running of the timer.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

Optionally, the processing module 702 is further configured to: determine that the timer expires; and determine that the physical resource cancels an SL consistent LBT failure state.

Optionally, the processing module 702 is specially configured to: determine that the SL consistent LBT failure occurs on the physical resource; and start the timer associated with the physical resource.

In an implementation, the first information includes measurement configuration information; and the processing module 702 is specially configured to: perform measurement based on the measurement configuration information; and determine a measurement result associated with the physical resource; and determine, based on the measurement result, whether the terminal resumes using the resources on the physical resource to receive and/or send the SL data.

Optionally, the processing module 702 is specially configured to: determine that the measurement result is less than or equal to a preset threshold, and determine that the terminal resumes using the resources on the physical resource to receive and/or send the SL data; or determine that the measurement result is greater than or equal to a preset threshold, and determine that the terminal does not resume using the resources on the physical resource to receive and/or send the SL data.

Optionally, the measurement includes at least one of: RSSI measurement; CO measurement; or CBR measurement.

In an implementation, an allocation mode of SL transmission resources for the terminal is to autonomously select the SL transmission resources; and the terminal is in at least one of the following states: an RRC connected state; an RRC idle state; an RRC inactive state; or an out-of-coverage state.

Through the device in the embodiments of the disclosure, when the SL consistent LBT failure occurs on the physical resource, the terminal determines, based on the determined first information, whether to resume using the resources on the physical resource to receive and/or send the SL data. Thus, the terminal may timely resume SL communication on the physical resource, improving the communication efficiency of the SL communication for the terminal and avoiding waste of communication resources.

In the case that the communication device 70 is the network device, the transceiver module 701 is configured to send first information to a terminal, in which the first information is used to indicate the terminal to determine, when determining that an SL consistent LBT failure occurs on a physical resource, whether the terminal resumes using resources on the physical resource to receive and/or send SL data.

In an implementation, the first information includes a timer; and the timer is used to indicate whether the terminal resumes using the resources on the physical resource to receive and/or send the SL data.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

In an implementation, the first information includes measurement configuration information; the measurement configuration information is configured for the terminal to perform measurement, to determine a measurement result associated with the physical resource; and the measurement result is used to indicate whether the terminal resumes using the resources on the physical resource to receive and/or send the SL data.

In an optional implementation, the measurement includes at least one of: RSSI measurement; CO measurement; or CBR measurement.

Through the device in the embodiments of the disclosure, the network device sends the first information to the terminal, so that when the SL consistent LBT failure occurs on the physical resource, the terminal determines, based on the first information, whether to resume using the resources on the physical resource to receive and/or send the SL data. Thus, the terminal may timely resume SL communication on the physical resource, improving the communication efficiency of the SL communication for the terminal and avoiding waste of communication resources.

Referring to FIG. 7, FIG. 7 is a block diagram illustrating another communication device 70 according to an embodiment of the disclosure. The communication device 70 may be a network device, or a terminal, or a chip, a system on chip or a processor that supports the network device to implement the above method, or a chip, a system on chip or a processor that supports the terminal to implement the above method. The communication device may be configured to implement the method described in the method embodiments, and for details reference is made to the descriptions in the method embodiments.

The communication device 70 may include one or more processors 701. The processor 701 may include a general purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal, a terminal chip, a DU or CU, etc.), to execute a computer program, and process data of the computer program.

Optionally, the communication device 70 may further include one or more memories 702 with a computer program 703 stored thereon. The processor 701 executes the computer program 703, so that the communication device 70 performs the method as described in the above method embodiments. Optionally, the memory 702 may further store data. The communication device 70 and the memory 702 may be independently configured or integrated together.

Optionally, the communication device 70 may further include a transceiver 704 and an antenna 705. The transceiver 704 may be referred to as a transceiving unit, a transceiver machine or a transceiving circuit, which may be configured to achieve a transceiving function. The transceiver 704 may include a receiver and a transmitter. The receiver may be referred to as a receiver machine or a receiving circuit, etc., for implementing a receiving function; the transmitter may be referred to as a transmitter machine or a transmitting circuit, etc. for implementing a transmitting function.

Optionally, the communication device 70 may further include one or more interface circuits 706. The interface circuit 706 is configured to receive code instructions and transmit the code instructions to the processor 701. The processor 701 runs the code instructions, to cause the communication device 70 to perform the method as described in the above method embodiments.

In the case where the communication device 70 is a terminal, the transceiver 704 is configured to perform S202 in FIG. 2; and the processor 701 is configured to perform S201 and S202 in FIG. 2; S301, S303, S304 and S305 in FIG. 3; or S401, S403, and S404 in FIG. 4.

In the case where the communication device 70 is a network device, the transceiver 704 is configured to perform S501 in FIG. 5.

In an implementation, the processor 701 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 701 may be stored with a computer program 703. When the computer program 703 is running on the processor 701, the communication device 70 may be caused to perform the method as described in the above method embodiments. The computer program 703 may be solidified in the processor 701, in which case the processor 701 may be implemented by hardware.

In an implementation, the communication device 70 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a terminal, but the scope of the communication device described in the disclosure is not limited, and a structure of the communication device may not be limited by FIG. 7. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network device, a cloud device, an artificial intelligence device, etc.;
(6) others, and so forth.

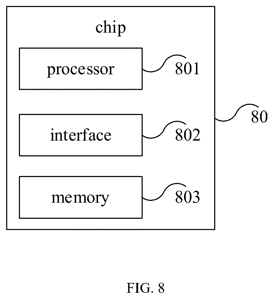

In the case that the communication device may be a chip or a system on chip, FIG. 8 may be referred, which is a block diagram illustrating a chip according to an embodiment of the disclosure. The chip in FIG. 8 includes a processor 801 and an interface 802. The number of processors 801 may be one or more and the number of interfaces 802 may be more than one.

In a case that the chip is configured to implement functions of the terminal in the embodiments of the disclosure, the processor 801 is configured to determine that an SL consistent LBT failure occurs on a physical resource; the interface 802 is configured to receive first information sent by a network device; and the processor 801 is further configured to determine, based on the first information, whether the terminal resumes using resources on the physical resource to receive and/or send SL data.

In an implementation, the first information includes a timer configured by the network device; and the processor 801 is specially configured to: determine the timer based on the first information; start the timer; determine that the terminal resumes using the resources on the physical resource to receive and/or send the SL data when the timer expires; or determine that the terminal does not resume using the resources on the physical resource to receive and/or send the SL data during running of the timer.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

Optionally, the processor 801 is further configured to: determine that the timer expires; and determine that the physical resource cancels an SL consistent LBT failure state.

Optionally, the processor 801 is specially configured to: determine that the SL consistent LBT failure occurs on the physical resource; and start the timer associated with the physical resource.

In an implementation, the first information includes measurement configuration information; and the processor 801 is specially configured to: perform measurement based on the measurement configuration information, and determine a measurement result associated with the physical resource; and determine, based on the measurement result, whether the terminal resumes using the resources on the physical resource to receive and/or send the SL data.

Optionally, the processor 801 is specially configured to: determine that the measurement result is less than or equal to a preset threshold, and determine that the terminal resumes using the resources on the physical resource to receive and/or send the SL data; or determine that the measurement result is greater than or equal to a preset threshold, and determine that the terminal does not resume using the resources on the physical resource to receive and/or send the SL data.

Optionally, the measurement includes at least one of: RSSI measurement; CO measurement; or CBR measurement.

In an implementation, an allocation mode of SL transmission resources for the terminal is to autonomously select the SL transmission resources; and the terminal is in at least one of the following states: an RRC connected state; an RRC idle state; an RRC inactive state; or an out-of-coverage state.

In a case that the chip is configured to implement functions of the terminal in the embodiments of the disclosure, the interface 802 is configured to send first information to a terminal, in which the first information is used to indicate the terminal to determine, when determining that an SL consistent LBT failure occurs on a physical resource, whether the terminal resumes using resources on the physical resource to receive and/or send SL data.

In an implementation, the first information includes a timer; and the timer is used to indicate whether the terminal resumes using the resources on the physical resource to receive and/or send the SL data.

In an optional implementation, the physical resource includes at least one of: a BWP; a resource pool; or an RB set.

Optionally, the timer is configured based on a specified granularity; and the specified granularity is at least one of: a BWP granularity; a resource pool granularity; an RB set granularity; or a terminal granularity.

In an implementation, the first information includes measurement configuration information; the measurement configuration information is configured for the terminal to perform measurement, to determine a measurement result associated with the physical resource; and the measurement result is used to indicate whether the terminal resumes using the resources on the physical resource to receive and/or send the SL data.

In an optional implementation, the measurement includes at least one of: RSSI measurement; CO measurement; or CBR measurement.

Optionally, the chip further includes a memory 803, configured to save necessary computer program and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a system for processing consistent LBT failure. The system includes the communication device functioning as the terminal in the aforementioned embodiment of FIG. 6 and the communication device functioning as the network device in the aforementioned embodiment of FIG. 6, or the system includes the communication device functioning as the terminal in the aforementioned embodiment of FIG. 7 and the communication device functioning as the network device in the aforementioned embodiment of FIG. 7.

A readable storage medium with instructions stored is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, prenegotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the disclosure.

Those skilled in the art may clearly understand that, for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for processing consistent listen before talk (LBT) failure, performed by a terminal, comprising:
determining that a sidelink (SL) consistent LBT failure occurs on a physical resource;
receiving first information sent by a network device; and
determining, based on the first information, whether the terminal resumes using resources on the physical resource to receive and/or send SL data.

2. The method according to claim 1, wherein the first information comprises a timer configured by the network device; and determining, based on the first information, whether the terminal resumes using the resources on the physical resource to receive and/or send the SL data, comprises:
determining the timer based on the first information;
starting the timer;
determining that the terminal resumes using the resources on the physical resource to receive and/or send the SL data when the timer expires; or
determining that the terminal does not resume using the resources on the physical resource to receive and/or send the SL data during running of the timer.

3. The method according to claim 2, wherein the physical resource comprises at least one of:
a bandwidth part (BWP);
a resource pool; or
a resource block (RB) set.

4. The method according to claim 3, wherein the timer is configured based on a specified granularity;
and the specified granularity is at least one of:
a BWP granularity;
a resource pool granularity;
an RB set granularity; or
a terminal granularity.

5. The method according to claim 2, further comprising:
determining that the timer expires; and
determining that the physical resource cancels an SL consistent LBT failure state.

6. The method according to any one of claims 2 to 5, wherein starting the timer comprises:
determining that the SL consistent LBT failure occurs on the physical resource; and
starting the timer associated with the physical resource.

7. The method according to claim 6, wherein the first information further comprises measurement configuration information; and determining, based on the first information, whether the terminal resumes using the resources on the physical resource to receive and/or send the SL data, comprises:
performing measurement based on the measurement configuration information, and determining a measurement result associated with the physical resource; and
determining, based on the measurement result, whether the terminal resumes using the resources on the physical resource to receive and/or send the SL data.

8. The method according to claim 7, wherein determining, based on the measurement result, whether the terminal resumes using the resources on the physical resource to receive and/or send the SL data, comprises:
determining that the measurement result is less than or equal to a preset threshold, and determining that the terminal resumes using the resources on the physical resource to receive and/or send the SL data; or
determining that the measurement result is greater than or equal to a preset threshold, and determining that the terminal does not resume using the resources on the physical resource to receive and/or send the SL data.

9. The method according to claim 7 or 8, wherein the measurement comprises at least one of:
received signal strength indicator (RSSI) measurement;
channel occupancy (CO) measurement; or
channel busy rate (CBR) measurement.

10. The method according to any one of claims 1 to 9, wherein an allocation mode of SL transmission resources for the terminal is to autonomously select the SL transmission resources; and
the terminal is in at least one of the following states:
a radio resource control (RRC) connected state;
an RRC idle state;
an RRC inactive state; or
an out-of-coverage state.

11. A method for processing consistent listen before talk (LBT) failure, performed by a network device, comprising:
sending first information to a terminal, wherein the first information is used to indicate the terminal to determine, when determining that a sidelink (SL) consistent LBT failure occurs on a physical resource, whether the terminal resumes using resources on the physical resource to receive and/or send SL data.

12. The method according to claim 11, wherein the first information comprises a timer; and the timer is used to indicate whether the terminal resumes using the resources on the physical resource to receive and/or send the SL data.

13. The method according to claim 12, wherein the physical resource comprises at least one of:
a bandwidth part (BWP);
a resource pool; or
a resource block (RB) set.

14. The method according to claim 13, wherein the timer is configured based on a specified granularity; and the specified granularity is at least one of:
a BWP granularity;
a resource pool granularity;
an RB set granularity; or
a terminal granularity.

15. The method according to claim 11, wherein the first information comprises measurement configuration information; the measurement configuration information is configured for the terminal to perform measurement, to determine a measurement result associated with the physical resource; and the measurement result is used to indicate whether the terminal resumes using the resources on the physical resource to receive and/or send the SL data.

16. The method according to claim 15, wherein the measurement comprises at least one of:
received signal strength indicator (RSSI) measurement;
channel occupancy (CO) measurement; or
channel busy rate (CBR) measurement.

17. A terminal, comprising:
a processing module, configured to determine that a sidelink (SL) consistent LBT failure occurs on a physical resource; and
a transceiver module, configured to receive first information sent by a network device;
wherein the processing module is further configured to determine, based on the first information, whether the terminal resumes using resources on the physical resource to receive and/or send SL data.

18. A network device, comprising:
a sending module, configured to send first information to a terminal, wherein the first information is used to indicate the terminal to determine, when determining that a sidelink (SL) consistent LBT failure occurs on a physical resource, whether the terminal resumes using resources on the physical resource to receive and/or send SL data.

19. A communication device, comprising a processor and a memory, wherein the memory stores a computer program, which, when executed by the processor, causes the communication device to implement the method according to any one of claims 1 to 10.

20. A communication device, comprising a processor and a memory, wherein the memory stores a computer program, which, when executed by the processor, causes the communication device to implement the method according to any one of claims 11 to 16.

21. A computer-readable storage medium storing instructions that, when executed, implement the method according to any one of claims 1 to 10.

22. A computer-readable storage medium storing instructions that, when executed, implement the method according to any one of claims 11 to 16.

23. A communication system, comprising:
a terminal, configured to perform the method according to any one of claims 1 to 10; and
a network device, configured to perform the method according to any one of claims 11 to 16.
